Europäisches Patentamt

European Patent Office

Office européen des brevets

(19)

(11) Publication number: **0 015 650**
**B1**

(12) **EUROPEAN PATENT SPECIFICATION**

(45) Date of publication of patent specification: **20.07.83**

(21) Application number: **80300358.1**

(22) Date of filing: **07.02.80**

(51) Int. Cl.³: **B 23 Q 35/12,**
**G 05 B 19/18,**
**B 23 Q 15/00, G 05 D 3/00**

(54) Tracer control apparatus.

(30) Priority: **09.02.79 JP 14098/79**

(43) Date of publication of application:
**17.09.80 Bulletin 80/19**

(45) Publication of the grant of the patent:
**20.07.83 Bulletin 83/29**

(84) Designated Contracting States:
**DE FR GB**

(56) References cited:
**DE - A - 1 763 056**
**DE - A - 2 109 921**
**DE - A - 2 911 486**
**US - A - 3 292 495**
**US - A - 3 300 696**
**US - A - 4 064 446**

(73) Proprietor: **Fanuc Ltd**
**5-1, Asahigaoka, 3-chome**
**Hino-shi, Tokyo 191 (JP)**

(72) Inventor: **Imazeki, Ryoji**
**No: 987-44, Naganuma-cho**
**Hachioji-shi Tokyo (JP)**
Inventor: **Yamazaki, Etuo**
**No. 566-93, Shimoongata-cho**
**Hachioji-shi Tokyo (JP)**

(74) Representative: **Bedggood, Guy Stuart et al,**
**Haseltine Lake & Co. Hazlitt House 28**
**Southampton Buildings Chancery Lane**
**London WC2A 1AT (GB)**

Courier Press, Leamington Spa, England.

## Tracer control apparatus

This invention relates to tracer control apparatus.

For surface profiling (180° profiling) with a tracer machining system the direction of feed is usually confined to either the X-axis or Y-axis directions, but depending upon the configuration of a model being traced, the accuracy of profiling may in some cases be enhanced by executing feed at an arbitrary angle rather than in the X-axis or Y-axis directions. For example, in the case of a square-shaped model it can be difficult to profile its four corner portions by feeding in the X- or Y-axis directions when the sides of the square are aligned in those directions. To avoid this difficulty a tracer control system has been proposed which can perform feed at an arbitrary angle to the X- or Y-axes.

An example of such a previously proposed tracer control system is such as is disclosed in Japanese Patent Disclosure No. 33579/75. Two coordinate conversion circuits, each formed by a resolver, are mechanically interlocked with one another, thereby to set up the direction of feed.

In such a system, however, since the two coordinate conversion circuits are mechanically ganged with one another to set up the direction of feed a high degree of mechanical accuracy, and consequently a complicated arrangement, is needed to provide for profiling with high accuracy.

U.S. patent serial No. 3 609 322 discloses a tracer control responsive to inputs from a tracing head for controlling servo mechanism inputs of a machine. From the tracing transducers, the system immediately converts the analog tracing signal into a digital representation. Through the use of digital differential analysers or modifications thereof, output pulse rates are obtained analogous to tracer error and suitable for use in machine servo systems. The system is capable of tracing a three-dimensional model in any plane within a coordinate system defined by the machine axes.

In apparatus disclosed in U.S. patent serial No. 3 609 322, as a tracing finger scans the model being traced a deflection in a plane perpendicular to the longitudinal axis of the tracing finger is measured and a deflection colinear with the longitudinal axis of the tracing finger is measured. From these measured deflections a digital signal representing total vector magnitude of deflection (the error) of the tracing finger and the sign of the error are derived.

The tracing plane is defined by feed rate and quadrature vectors which originate at the point of contact (the point of trace) between the tracing finger and the model being traced. The feed rate vector is directed along the direction of feed of the tracing finger and the quadrature vector is perpendicular to the feed rate vector.

In dependence upon the sign and magnitude of the error the frequency of a pulse train which drives a rotational constant modifier and a quadrature constant modifier is modified.

The outputs of the rotational constant modifier and the quadrature constant modifier respectively control response of the system in a direction normal to the tracing path at the point of trace and response of the system to changes in the direction of tracing (that is, deviations from a linear tracing path).

The rotational constant modifier outputs a pulse train which drives a sine-cosine generator which holds digital values representative of a planar angle of rotation.

Sine and co-sine outputs of the sine-cosine generator are used to project feed rate and quadrature vectors onto coordinate axes of the system; that is, to provide projected vectors in the tracing plane and parallel to coordinate axes of the system.

In a Plane Steering mode, the operator may rotate the tracing plane through two steering angles. The tracing plane may first be rotated about a coordinate axis parallel to one of the projected vectors, and then about an axis perpendicular to the axis of first rotation.

Digital signals defining the sine and co-sine values of the plane steering rotations are employed to re-project the above-mentioned projected vectors parallel to the coordinate axes of the system, since the projected vectors themselves are skewed with respect to those coordinate axes by the plane steering rotation.

According to the present invention there is provided tracer control apparatus, for a tracer machining system having drivers for driving a tracer head of the system along respective mutually perpendicular X, Y and Z axes, in which tracer control is effected in dependence upon displacement signals from the tracer head, and in which tracer machining can be effected along any desired feed axis in the X—Y plane, characterised by:

first coordinate conversion means including digital-to-analog converter means operable to have set therein digital signals representative respectively of the cosine and sine of the azimuthal angle of a desired feed axis (the feed axis) in the plane defined by the X and Y axes (the X—Y plane) and operable to convert the set digital signals into respective analog signals, the first coordinate conversion means being operable to multiply the analog signals representative of the direction of the feed axis in the X—Y plane respectively by tracer head displacement signals (the X-axis signal and the Y-axis signal) representative respectively of tracer head displacements along the X and Y axes, and operable to add together the results of those respective multiplications, thereby to obtain a signal (the feed axis signal) representative of displacement in relation to the feed axis, and

2

second coordinate conversion means operable to multiply respective signals representative of the direction of the feed axis by a signal for controlling feed rate along the feed axis, to provide as results of those respective multiplications signals for controlling feed rate along the X-axis and the Y-axis.

Apparatus embodying this invention can permit feed in an arbitrary direction with high accuracy provided by a simple structure.

Briefly, in an embodiment of the present invention, by means of which tracer control is effected through utilization of a displacement signal from a tracer head, there are provided a first coordinate conversion circuit in which signals representative of the cosine and the sine of the azimuth angle of an arbitrary feed axis in the X—Y plane of a mechanical coordinate system and X-axis and Y-axis displacement signals from the tracer head are respectively multiplied together by multipliers and the output signals from the multipliers are added together by an adder to obtain a displacement component signal relating to the feed axis, and a second coordinate conversion circuit in which the signals representative of the cosine and the sine of the azimuth angle of the feed axis are respectively multiplied (in respective multipliers) by a signal for controlling the feed rate along the feed axis, to convert the signal for controlling the feed rate along the feed axis into signals for controlling feed rates in the X-axis and Y-axis directions. By controlling the feed rates in the X-axis and Y-axis directions with the output signals from the second coordinate conversion circuit, the direction of the feed axis in the mechanical coordinate system can be set up as desired.

Reference will now be made, by way of example, to the accompanying drawings, in which:—

Fig. 1 is a schematic block diagram illustrating apparatus embodying the present invention; and

Fig. 2 is a vector diagram for assistance in explanation of the relationships of signals developed in the apparatus of Fig. 1.

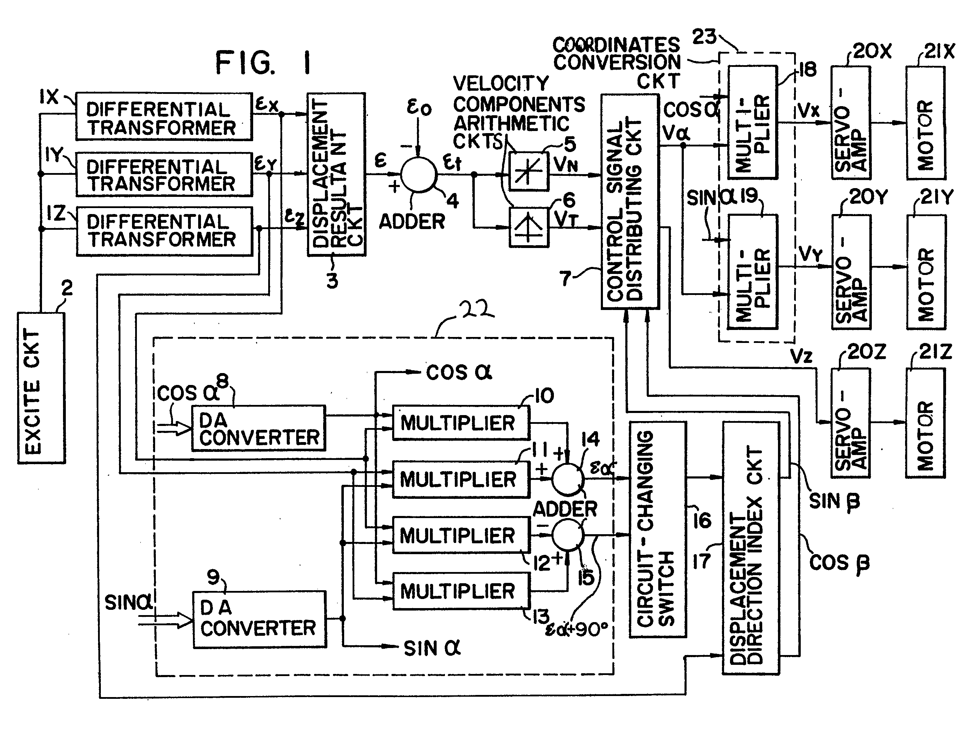

In Fig. 1, 1X, 1Y and 1Z are differential transformers of a tracer head; 2 is a differential transformer excite circuit; 3 is a displacement resultant circuit; 4, 14 and 15 are adders; 5 and 6 are velocity component arithmetic circuits; 7 is a control signal distributing circuit; 8 and 9 are DA converters; 10 to 13 and 18 and 19 are multipliers; 16 is a circuit-changing switch; 17 is a displacement direction index circuit; 20X, 20Y and 20Z are servo-amplifiers; 21X, 21Y and 21Z are motors; and 22 and 23 are coordinate conversion circuits indicated by broken-lined rectangles.

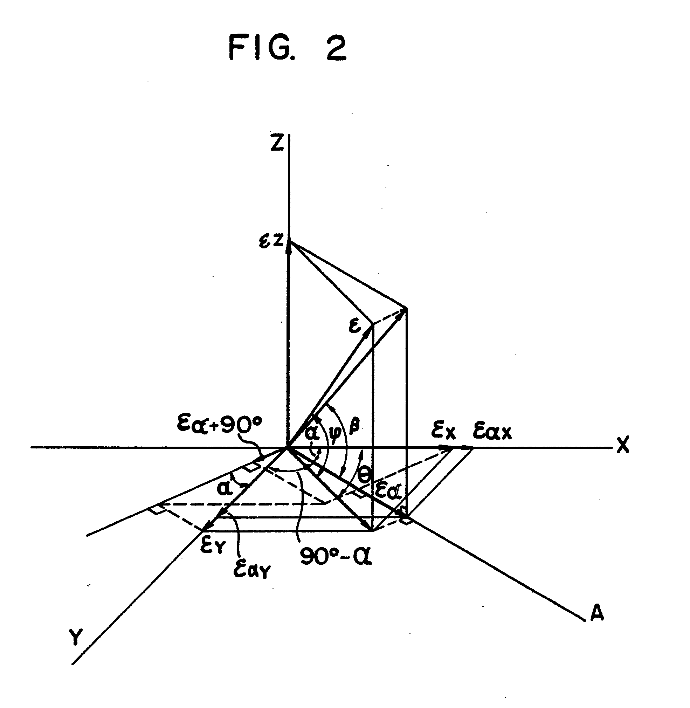

The differential transformers 1X, 1Y and 1Z are excited by the excite circuit 2 at an AC frequency $f$. Displacement signals $\varepsilon_x$, $\varepsilon_y$ and $\varepsilon_z$ (which are yielded by the differential transformers as a result of displacement of the tracer head as it is fed along in contact with the surface of a model (not shown) in accordance with which machining of a workpiece is effected) are here, for the purposes of explanation, taken to correspond to a displacement vector $\vec{\varepsilon}$ for the tracer head, as shown in the vector diagram of Fig. 2.

For vector $\vec{\varepsilon}$

$$\varepsilon_x = \varepsilon \cos \varphi \cdot \cos \theta \cdot \sin \omega t \qquad (1)$$

$$\varepsilon_y = \varepsilon \cos \varphi \cdot \sin \theta \cdot \sin \omega t \qquad (2)$$

$$\varepsilon_z = \varepsilon \sin \varphi \cdot \sin \omega t \qquad (3)$$

where

$\varepsilon$ is the magnitude of vector $\vec{\varepsilon}$, $\omega t = 2 \pi f t$,

$\varphi$ is the angle between vector $\vec{\varepsilon}$

and the X—Y plane in the vector diagram of Figure 2, and $\theta$ is the angle between the projection of vector $\vec{\varepsilon}$ onto the X—Y plane in Figure 2 and the X-axis.

In ordinary profiling, a resultant displacement

$$\varepsilon = \sqrt{\varepsilon_x{}^2 + \varepsilon_y{}^2 + \varepsilon_z{}^2}$$

is obtained by the displacement resultant circuit 3; a difference $\varepsilon_t$ between the resultant displacement $\varepsilon$ and a reference displacement $\varepsilon_0$ is detected by the adder 4; a feed rate $V_z$ in the Z-axis direction and a feed rate $V_x$ in the X-axis direction are detected by means of the velocity component arithmetic circuits 5 and 6; and the feeds of the tracer head and of a cutting tool are controlled in dependence upon the feed rates $V_z$ and $V_x$ so that the abovementioned difference $\varepsilon_t$ is reduced to zero.

When profiling in an arbitrary feed direction, for example, in a direction along the A-axis shown in Fig. 2, the azimuth angle $\alpha$ of axis A is set up in the coordinate conversion circuits 22 and 23. The coordinate conversion circuit 22 comprises DA converters 8 and 9, multipliers 10 to 13 and adders 14 and 15. The azimuth angle $\alpha$ is set up in circuit 22 by applying a digital signal representing $\cos \alpha$ to DA converter 8 and by applying a signal representing $\sin \alpha$ to DA converter 9. The coordinate conversion circuit 23 comprises multipliers 18 and 19 and is supplied with output signals from DA converters 8 and 9.

DA converter 8 converts a supplied digital signal representing $\cos \alpha$ into an analog signal for input to the multipliers 10, 13 and 18, whereas DA converter 9 similarly converts a supplied digital signal

representing sin $\alpha$ into an analog signal for input to the multipliers 11, 12 and 19. The multipliers 10 and 12 are each supplied with the displacement signal $\varepsilon_x$ relating to the X-axis direction, from differential transformer 1X, and the multipliers 11 and 13 are each supplied with the displacement signal $\varepsilon_y$, relating to the Y-axis direction, from differential transformer 1Y. The output signals from the multipliers 10 and 11 are supplied to adder 14 to derive therefrom a signal $\varepsilon_\alpha$ given by expression (4) below. The output signals from the multipliers 12 and 13 are supplied to adder 15 to derive therefrom a signal $\varepsilon_{\alpha+90°}$ given by expression (5) below.

$$\varepsilon_\alpha = \varepsilon_x \cos \alpha + \varepsilon_y \sin \alpha \tag{4}$$

$$\varepsilon_{\alpha+90°} = \varepsilon_y \cos \alpha - \varepsilon_x \sin \alpha = \varepsilon_x \cos (\alpha+90°) + \varepsilon_y \sin (\alpha+90°) \tag{5}$$

Fig. 2 shows the vector relationships between $\varepsilon_\alpha$ and $\varepsilon_{\alpha+90°}$. The X-axis direction component $\varepsilon_{\alpha x}$ and the Y-axis direction component $\varepsilon_{\alpha y}$ of the signal $\varepsilon_\alpha$ as given by expression (4) above become $\varepsilon_\alpha \cos \alpha$ and $\varepsilon_\alpha \sin \alpha$, respectively as shown in Figure 2; and the X-axis direction component $\varepsilon_{(\alpha+90°)x}$ and the Y-axis direction component $\varepsilon_{(\alpha+90°)y}$ of the signal $\varepsilon_{\alpha+90°}$ as given by expression (5) above become $\varepsilon_{\alpha+90°} \cos(\alpha+90°)$ and $\varepsilon_{\alpha+90°} \sin(\alpha+90°)$, respectively. The circuit-changing switch 16 selectively applies one or the other of the signals $\varepsilon_\alpha$ and $\varepsilon_{\alpha+90°}$ to displacement direction index circuit 17. By changing over between the signals $\varepsilon_\alpha$ and $\varepsilon_{\alpha+90°}$, the azimuth angle of feed can be changed through 90°.

In a case in which signal $\varepsilon_\alpha$ of expression (4) is output from circuit-changing switch 16, the displacement direction index circuit 17 indexes an angle $\beta$ in the plane A—Z (see Fig. 2) from the displacement component signal $\varepsilon_\alpha$ along the coordinate axis A and the displacement signal $\varepsilon_z$ along the Z-axis, applied from differential transformer 1Z, to provide a cosine signal $\cos \beta \cdot \sin \omega t$ and a sine signal $\sin \beta \cdot \sin \omega t$ dependent upon the direction of displacement. The sine signal and the cosine signal thus obtained and a normal velocity $V_N$ and a tangential velocity $V_T$ derived from the known velocity component arithmetic circuits 5 and 6 are applied to the known control signal distributing circuit 7, from which control signals for the velocity $V_\alpha$ in the A-axis direction and the velocity $V_z$ in the Z-axis direction are derived, for example, by a multiplier, a mixer and so forth of the circuit 7. The control signal for the velocity $V_z$ in the Z-axis direction is delivered to the servo-amplifier 20Z, the output from which is supplied to the motor 21Z to drive that motor.

The control signal for the velocity $V_\alpha$ in the A-axis direction is applied to the multipliers 18 and 19 forming coordinate conversion circuit 23. Since the multipliers 18 and 19 are respectively supplied with the output signals $\cos \alpha$ and $\sin \alpha$ from DA converters 8 and 9, the output signals from the multipliers 18 and 19 are converted control signals designating a velocity $V_x$ in the X-axis direction and a velocity $V_y$ in the Y-axis direction, respectively. These control signals are respectively applied to the servo-amplifiers 20X and 20Y, whose outputs are provided to the motors 21X and 21Y to drive those motors. By means of motors 21X and 21Y, feed in the A-axis direction is effected. The feed axis (A axis) can freely be set up by the coordinate conversion circuits 22 and 23. The coordinate conversion circuit 22 has DA converters 8 and 9, and data for setting up the direction of feed is applied as digital data via DA converters 8 and 9, so that it is possible to store the directional information as digital data and read t from store by means of a program. Accordingly, feed direction can be changed automatically.

As has been described above, tracer control apparatus embodying this invention comprises multipliers for multiplying a signal representative of the angle of the feed axis (A axis) and X- and Y-axis displacement signals derived from a tracer head, adders for adding output signals from the multipliers, a first coordinate conversion circuit for producing a displacement component signal relating to the direction of the feed axis (A axis), multipliers for multiplying a signal for controlling the feed rate along the feed axis (A axis) and a signal representative of the angle of the feed axis (A-axis), and a second coordinate conversion circuit for converting the feed rate along the feed axis (A axis) into signals for controlling the feed rates along the X- and the Y-axis. Since the direction of feed can be set up merely by applying to the first and second coordinate conversion circuits a signal representative of the angle of the feed axis the system does not require mechanical moving elements such as a resolver or the like, and is simple in construction and easy to manipulate.

Apparatus embodying the present invention is for a tracer machining system in which tracer control involves the use of a displacement signal from a tracer head tracing the surface of a model; there are provided a first coordinate conversion circuit in which signals representative of the cosine and sine of the azimuth angle of a desired feed axis in the X—Y plane of a mechanical coordinate system and X- and Y-axis displacement signals of the tracer head are multiplied together by multipliers and the output signals from the multipliers are added together, thereby to obtain a displacement component signal referring to the desired feed axis, and a second coordinate conversion circuit in which a signal for controlling feed rate along the feed axis and the signals representative of the cosine and sine of the azimuth angle of the desired feed axis are respectively multiplied together by multipliers to obtain feed rates along the X- and the Y-axis. By controlling the feed rates in the X-axis and Y-axis directions by means of the output signals from the second coordinate conversion circuit, a desired feed axis in the mechanical coordinate system can be set up at will.

## Claims

1. Tracer control apparatus, for a tracer machining system having drivers (20X to 20Z, 21X to 21Z) for driving a tracer head of the system along respective mutually perpendicular X, Y and Z axes, in which tracer control is effected in dependence upon displacement signals ($\varepsilon_x$, $\varepsilon_y$, $\varepsilon_z$) from the tracer head, and in which tracer machining can be effected along any desired feed axis in the X—Y plane, characterised by:

first coordinate conversion means (22) including digital-to-analog converter means (8, 9) operable to have set therein digital signals representative respectively of the cosine and sine of the azimuthal angle ($\alpha$) of a desired feed axis (the feed axis) (A) in the plane defined by the X and Y axes (the X—Y plane) and operable to convert the set digital signals into respective analog signals (cos $\alpha$, sin $\alpha$), the first coordinate conversion means (22) being operable to multiply the analog signals (cos $\alpha$, sin $\alpha$) representative of the direction ($\alpha$) of the feed axis (A) in the X—Y plane respectively by tracer head displacement signals ($\varepsilon_x$, $\varepsilon_y$) (the X-axis signal and the Y-axis signal) representative respectively of tracer head displacements along the X and Y axes, and operable to add together the results of those respective multiplications, thereby to obtain a signal (the feed axis signal) ($\varepsilon_\alpha$) representative of displacement in relation to the feed axis (A), and

second coordinate conversion means (23) operable to multiply respective signals representative of the direction ($\alpha$) of the feed axis (A) by a signal for controlling feed rate ($V_\alpha$) along the feed axis (A), to provide as results of those respective multiplications signals for controlling feed rate along the X-axis ($V_x$) and the Y-axis ($V_y$).

2. Apparatus as claimed in claim 1, including means, operable to derive the signal for controlling feed rate ($V_\alpha$) along the desired feed axis (A), comprising:

displacement direction index means (17) connectible to receive the said feed axis signal ($\varepsilon_\alpha$) and a tracer head displacement signal representative of tracer head displacement along the Z-axis (the Z-axis signal) ($\varepsilon_z$), and operable in dependence upon the received signals to index the direction ($\beta$) of tracer head displacement in the plane containing the feed axis (A) and the Z-axis; and

control signal generating means (7) operable to receive an output signal from the displacement direction index means (17) indicative of the direction ($\beta$) of tracer head displacement in the feed axis-Z-axis plane, a normal velocity signal ($V_N$) and a tangential velocity ($V_T$) signal derived from a resultant displacement signal ($\varepsilon$) of the X, Y and Z axis signals ($\varepsilon_x$, $\varepsilon_y$, $\varepsilon_z$) to derive therefrom the signal for controlling feed rate ($V_\alpha$) along the feed axis (A).

3. Apparatus as claimed in claim 2, wherein the control signal generating means (7) derive also a signal for controlling feed rate ($V_z$) along the Z-axis.

4. Apparatus as claimed in any preceding claim, wherein the first coordinate conversion means (22) are operable also to multiply the said analog signals (cos $\alpha$, sin $\alpha$) representative of the direction ($\alpha$) of the feed axis (A) respectively by the Y-axis signal ($\varepsilon_y$) and the X-axis signal ($\varepsilon_x$) and to add together the results of those respective multiplications thereby to obtain a signal (the perpendicular signal) ($\varepsilon_{\alpha+90°}$) representative of displacement in relation to an axis (the perpendicular axis) in the X—Y plane perpendicular to the feed axis (A).

5. Apparatus as claimed in claim 4, read as appended to claim 2, wherein the displacement direction index means (17) are connectible also to receive the perpendicular signal ($\varepsilon_{\alpha+90°}$) and are operable in dependence upon the perpendicular signal ($\varepsilon_{\alpha+90°}$) and Z-axis signal ($\varepsilon_z$) to index the direction of tracer head displacement in the plane containing the perpendicular axis and the Z-axis, and the control signal generating means (7) are then operable to receive an output signal from the displacement direction index means (17) indicative of the direction of tracer head displacement in the perpendicular axis-Z-axis plane, in place of the output signal ($\varepsilon_\alpha$) indicative of tracer head displacement in the feed axis-Z-axis plane, to derive a signal for controlling feed rate along the perpendicular axis.

6. Apparatus as claimed in claim 5, including a change-over switch (16) selectively operable to connect the displacement direction index means (17) to receive the feed axis signal ($\varepsilon_\alpha$) or the perpendicular axis signal ($\varepsilon_{\alpha+90°}$).

7. Apparatus as claimed in any preceding claim, wherein the first and second coordinate conversion means (22, 23) include circuitry wherein the said respective multiplications are effected by respective multipliers (10 to 13, 18, 19) and the first coordinate conversion means (22) include an adder (14) for effecting the addition of the results of the respective multiplications of claim 1 that take place in those means.

8. Apparatus as claimed in claim 7, read as appended to claim 4, wherein the first coordinate conversion means (22) include a further adder (15) for effecting the addition of the results of the respective multiplications of claim 4.

## Patentansprüche

1. Fühlersteuerung bei einem Nachformbearbeitungssystem mit Antrieben (20X—20Z, 21X—21Z), um einen Fühlerkopf des Systems entlang aufeinander senkrecht stehender Achsen X, Y und Z zu bewegen, wobei die Fühlersteuerung in Abhängigkeit von Versetzungssignalen ($\varepsilon_x$, $\varepsilon_y$, $\varepsilon_z$) des Fühler-

**0 015 650**

kopfes betätigt wird und wobei die Nachformungsbearbeitung entlang jeder gewünschten Vorschubachse in der X—Y Ebene durchgeführt werden kann, gekennzeichnet durch:

erste Koordinatenumwandlungsmittel (22) mit digital-zu analog Umwandlungsmitteln (8, 9), die betätigbar sind, um darin digitale Signale, die den Cosinus bzw. den Sinus des Azimuthwinkels ($\alpha$) der gewünschten Vorschubachse (A) der durch die X- und Y-Achse bestimmten Ebene darstellen und um die eingestellten digitalen Signal in entsprechende Analogiesignale (cos $\alpha$, sin $\alpha$) umzuwandeln, wobei die ersten Koordinatenumwandlungsmittel (22) die analogen Signale (cos $\alpha$, sin $\alpha$), die für die Richtung ($\alpha$) der Vorschubachse (A) in der X—Y Ebene stehen, mit den Versetzungssignalen ($\varepsilon_x$, $\varepsilon_y$) (Signale der X-Achse bzw. der Y-Achse), die für die Versetzung des Fühlerkopfes entlang der X- bzw. Y-Achse stehen, multiplizieren und die Resultate der jeweiligen Multiplikationen addieren, um ein Signal (Vorschubachsensignal) ($\varepsilon_\alpha$) zu erhalten, das für die Versetzung bezüglich der Vorschubachse (A) steht und

zweite Koordinatenumwandlungsmittel (23), die Signale, die die Richtung ($\alpha$) der Vorschubachse (A) angeben mit einem Signal, das die Vorschubgeschwindigkeit ($v_\alpha$) entlang der Vorschubachse (A) steuert, multiplizieren, um als Ergebnis dieser Multiplikationen Signale erhalten, die die Vorschubgeschwindigkeit entlang der X-Achse ($V_x$) und der Y-Achse ($V_y$) steuern.

2. Steuerung nach Anspruch 1 mit betätigbaren Mitteln, die ein Signal erzeugen, um die Vorschubgeschwindigkeit ($V_\alpha$) entlang der gewünschten Vorschubachse (A) zu steuern, gekennzeichnet durch:

verbindbare Mittel (17), die die Richtung der Versetzung angeben, um das Vorschubsignal ($\varepsilon_\alpha$) und ein Versetzungssignal des Fühlerkopfes, das für die Versetzung des Fühlerkopfes entlang der Z-Achse ($\varepsilon_z$) steht (das Z-Achsensignal) zu empfangen und in Abhängigkeit vom empfangenen Signal die Richtung ($\beta$) der Versetzung des Fühlerkopfes in der Ebene, die durch die Vorschubachse (A) und die Z-Achse bestimmt wird, anzeigen und durch

Signalerzeugungsmittel (7) für Steuersignale, die ein Ausgangssignal von den die Versetzungsrichtung anzeigenden Mitteln (17), das die Richtung ($\beta$) der Versetzung des Fühlerkopfes in der Vorschub-Z-Achsenebene angibt, ein normales Geschwindigkeitssignal ($V_N$) und ein Signal für die tangentiale Geschwindigkeit ($V_T$), das von einem resultierenden Versetzungssignal ($\varepsilon$) der Signale ($\varepsilon_x$, $\varepsilon_y$, $\varepsilon_z$) der X, Y und Z-Achsen abgeleitet wird, aufnehmen um daraus das Signal zur Steuerung des Vorschubs auf der Vorschubachse (A) herzuleiten.

3. Steuerung nach Anspruch 2, dadurch gekennzeichnet, daß die Mittel zum Erzeugen des Kontrollsignals auch ein Signal zur Kontrolle des Vorschubs ($V_z$) entlang der Z-Achse erzeugen.

4. Steuerung nach einem der vorhergehenden Ansprüche dadurch gekennzeichnet, daß die ersten Koordinatenumwandlungsmittel (22), die die analogen Signale (cos $\alpha$, sin $\alpha$), die für die Richtung ($\alpha$) der Vorschubachse (A) mit dem Signal der Y-Achse ($\varepsilon_y$) und der X-Achse ($\varepsilon_x$) multiplizieren und die Ergebnisse dieser Multiplikationen addieren, um ein Signal (das lotrechte Signal) ($\varepsilon_{\alpha+90°}$) zu erhalten, das die Versetzung gegenüber einer Achse (der lotrechten Achse) in der X—Y Ebene senkrecht zur Vorschubachse (A) angibt.

5. Steuerung nach Anspruch 4, abhängig von Anspruch 2 dadurch gekennzeichnet, daß die Anzeigemittel (17) für die Versetzungsrichtung auch anschließbar sind, um das Lotrechtsignal ($\varepsilon_{\alpha+90°}$) aufzunehmen und in Abhängigkeit von dem Lotrechsignal ($\varepsilon_{\alpha+90°}$) und dem Z-Achsen Signal ($\varepsilon_z$) die Richtung der Fühlerkopfversetzung in der Ebene zu registrieren, die von der Lotrechtachse und der Z-Achse bestimmt wird und die Mittel (7) zur Erzeugung der Steuersignale dann ein Ausgangssignal von den Anzeigemitteln (17) für die Versetzungsrichtung, das die Richtung der Versetzung des Fühlerkopfes in der durch die Lotrecht- und die Z-Achse bestimmte Ebene, anstelle des Ausgangssignals ($\varepsilon_\alpha$) empfangen, das die Versetzung des Fühlerkopfes in der Ebene angibt, die durch die Vorschubachse und die Z-Achse bestimmt wird, um ein Signal zur Steuerung des Vorschubs entlang der Lotrechtachse zu erhalten.

6. Steuerung nach Anspruch 5 dadurch gekennzeichnet, daß ein Umschalter (16) vorgesehen ist, der wahlweise die Mittel (17) zur Erfassung der Versetzungsrichtung einschaltet, um das Signal ($\varepsilon_\alpha$) der Vorschubachse oder das Signal ($\varepsilon_{\alpha+90°}$) der Lotrechtachse aufzunehmen.

7. Steuerung nach einem der vorhergehenden Ansprüche dadurch gekennzeichnet, daß die ersten und zweiten Mittel zur Koordinatenumwandlung (22, 23) Schaltungen enthalten, in denen die jeweiligen Multiplikationen durch entsprechende Vervielfacher (10—13, 18, 19) vorgenommen werden und die ersten Koordinatenumwandlungsmittel (22) eine Addiereinrichtung (14) einschließen, um die Addition der Ergebnisse der von dem Mitteln nach Anspruch 1 durchgeführten Multiplikationen auszuführen.

8. Steuerung nach Anspruch 7 abhängig vom Anspruch 4 dadurch gekennzeichnet, daß die ersten Koordinatenumwandlungsmittel (22) eine weitere Addiereinrichtung aufweisen, um die Addition der Ergebnisse der entsprechenden Multiplikationen nach Anspruch 4 durchzuführen.

**Revendications**

1. Dispositif de commande d'un palpeur, pour un système d'usinage par copiage comportant des organes d'entraînement (20X à 20Z, 21X à 21Z) destinés à entraîner une tête de palpeur du système

6

**0 015 650**

selon des axes respectifs X, Y et Z, mutuellement perpendiculaires, dans lequel la commande du palpeur est effectuée sous la dépendance de signaux de déplacement ($\varepsilon_x$, $\varepsilon_y$, $\varepsilon_z$) provenant de la tête de palpeur, et dans lequel on peut effectuer un usinage par copiage selon n'importe quel axe d'avance désiré dans le plan X—Y, caractérisé par:

des premiers moyens de conversion de coordonnées (22) comprenant des moyens convertisseurs numérique-analogique (8, 9) dans lesquels on peut fixer des signaux numériques respectivement représentatifs du cosinus et du sinus de l'angle d'azimut ($\alpha$) d'un axe d'avance désiré (l'axe d'avance) (A) dans le plan défini par les axes X et Y (le plan X—Y), et qui sont capables de convertir les signaux numériques fixés en signaux analogiques respectifs (cos $\alpha$, sin $\alpha$), les premiers moyens de conversion de coordonées (22) pouvant multiplier respectivement les signaux analogiques (cos $\alpha$, sin $\alpha$) représentatifs de la direction ($\alpha$) de l'axe d'avance (A) dans le plan X—Y par des signaux de déplacement de tête de palpeur ($\varepsilon_x$, $\varepsilon_y$) (le signal de l'axe X et le signal de l'axe Y), respectivement représentatifs des déplacements de la tête de palpeur selon les axes X et Y, et pouvant additionner ensemble les résultats de ces multiplications respectives, de façon à obtenir un signal (le signal de l'axe d'avance) ($\varepsilon_\alpha$) représentatif du déplacement rapporté à l'axe d'avance (A), et

des seconds moyens de conversion de coordonnées (23) qui peuvent multiplier des signaux respectifs représentatifs de la direction ($\alpha$) de l'axe d'avance (A) par un signal destiné à commander la vitesse d'avance ($V_\alpha$) selon l'axe d'avance (A), pour fournir en tant que résultats de ces multiplications respectives des signaux destinés à commander la vitesse d'avance selon l'axe X ($V_x$) et l'axe Y ($V_y$).

2. Dispositif selon la revendication 1, comprenant des moyens, capable d'élaborer le signal pour la commande de la vitesse d'avance ($V_\alpha$) selon l'axe d'avance désiré (A), qui comprennent:

des moyens d'indexage de direction de déplacement (17) qui peuvent être connectés de façon à recevoir le signal de l'axe d'avance ($\varepsilon_\alpha$) et un signal de déplacement de tête de palpeur représentatif du déplacement de la tête de palpeur selon l'axe Z (le signal de l'axe Z) ($\varepsilon_z$), et qui peuvent fonctionner sous la dépendance des signaux reçus de façon à indexer la direction ($\beta$) du déplacement de la tête de palpeur dans le plan contenant l'axe d'avance (A) et l'axe Z; et

des moyens de génération de signaux de commande (17) qui peuvent recevoir un signal de sortie provenant des moyens d'indexage de direction de déplacement (17), représentatif de la direction ($\beta$) du déplacement de la tête de palpeur dans le plan axe d'avance-axe Z, un signal de vitesse normale ($V_N$) et un signal de vitesse tangentielle ($V_T$) élaborés à partir d'un signal de déplacement résultant ($\varepsilon$) des signaux des axes X, Y et Z ($\varepsilon_x$, $\varepsilon_y$, $\varepsilon_z$), pour élaborer à partir d'eux le signal destiné à commander la vitesse d'avance ($V_\alpha$) selon l'axe d'avance (A).

3. Dispositif selon la revendication 2, caractérisé en ce que les moyens de génération de signaux de commande (7) élaborent également un signal pour commander la vitesse d'avance ($V_z$) selon l'axe Z.

4. Dispositif selon l'une quelconque des revendications précédentes, dans lequel les premiers moyens de conversion de coordonnées (22) peuvent également multiplier respectivement les signaux analogiques (cos $\alpha$, sin $\alpha$) représentatifs de la direction de l'axe d'avance (A) par le signal de l'axe Y ($\varepsilon_y$) et par le signal de l'axe X ($\varepsilon_x$) et additionner ensemble les résultats de ces multiplications respectives, pour obtenir ainsi un signal (le signal perpendiculaire) ($\varepsilon_{\alpha+90°}$) représentatif du déplacement rapporté à un axe (l'axe perpendiculaire) dans le plan X—Y, qui est perpendiculaire à l'axe d'avance (A).

5. Dispositif selon la revendication 4, considérée comme dépendante de la revendication 2, dans lequel les moyens d'indexage de direction de déplacement (17) peuvent également être connectés de façon à recevoir le signal perpendiculaire ($\varepsilon_{\alpha+90°}$) et peuvent fonctionner sous la dépendance du signal perpendiculaire ($\varepsilon_{\alpha+90°}$) et du signal de l'axe Z ($\varepsilon_z$) de façon à indexer la direction de déplacement de la tête de palpeur dans le plan contenant l'axe perpendiculaire et l'axe Z, et les moyens de génération de signaux de commande (7) peuvent alors recevoir un signal de sortie provenant des moyens d'indexage de direction de déplacement (17), représentatif de la direction du déplacement de la tête de palpeur dans le plan axe perpendiculaire-axe Z, au lieu du signal de sortie ($\varepsilon_\alpha$) représentatif du déplacement de la tête de palpeur dans le plan axe d'avance-axe Z, afin d'élaborer un signal pour commander la vitesse d'avance selon l'axe perpendiculaire.

6. Dispositif selon la revendication 5, comprenant un commutateur (16) qu'on peut actionner sélectivement pour connecter les moyens d'indexage de direction de déplacement (17) de façon qu'ils reçoivent le signal de l'axe d'avance ($\varepsilon_\alpha$) ou le signal de l'axe perpendiculaire ($\varepsilon_{\alpha+90°}$).

7. Dispositif selon l'une quelconque des revendications précédentes, dans lequel les premiers et seconds moyens de conversion de coordonnées (22, 23) comprennent des circuits dans lesquels les multiplications effectives sont effectuées par des multiplicateurs respectifs (10 à 13, 18, 19) et les premiers moyens de conversion de coordonnées (22) comprennent un additionneur (14) destiné à effectuer l'addition des résultats des multiplications respectives de la revendication 1 qui ont lieu dans ces moyens.

8. Dispositif selon la revendication 7, considérée comme dépendante de la revendication 4, dans lequel les premiers moyens de conversion de coordonnées (22) comprennent un additionneur supplémentaire (15) pour effectuer l'addition des résultats des multiplications respectives de la revendication 4.

7

FIG. 1

# FIG. 2